# DEMANDE DE BREVET EUROPEEN

(11) **EP 2 009 693 A1**
(43) Date de publication de la demande: **31.12.2008**
(21) Numéro de dépôt: 07301186.8
(22) Date de dépôt: 29.06.2007
(51) Int. Cl.: H01L 23/58, G06F 12/14, G06K 19/073, H01L 25/065

(54) **Procédé de fabrication d'un système électronique sécurisé, dispositif de sécurisation de circuit intégré et système électronique correspondants**

(71) Demandeur: Axalto S.A., 92190 Meudon (FR)
(72) Inventeur: Gravez, Pierre, 91430 Nogent sur Marne (FR); Thill, Michel, 78340 Les Clayes sous Bois (FR)

(57) **Abrégé**

L'invention concerne un procédé (30) pour fabriquer un système électronique sécurisé à l'aide d'un dispositif de sécurisation rapporté sur au moins un premier circuit intégré. Selon l'invention, le dispositif de sécurisation formant un deuxième circuit intégré (1) comportant au moins un réseau de connexions électriques (14), le procédé comprend une étape d'assemblage (34) du dispositif de sécurisation et du premier circuit intégré, pour former le système, une étape de capture (38) d'une image électrique de référence propre au réseau de connexions électriques du système formé, une étape de configuration (310) du système formé, pour comparer une image électrique à capturer lors du fonctionnement du premier circuit intégré à l'image électrique de référence.

L'invention concerne également le dispositif de sécurisation (1) et le système électronique sécurisé correspondants.

## Description

### Domaine technique de l'invention :

L'invention concerne un procédé de fabrication d'un système électronique sécurisé à l'aide d'un dispositif de sécurisation rapporté sur au moins un premier circuit intégré. L'invention porte également sur un dispositif de sécurisation apte à sécuriser au moins un premier circuit intégré et sur un système électronique sécurisé ainsi fabriqué.

### Etat de la technique :

Les dispositifs électroniques portables sont, de nos jours, de plus en plus utilisés. A titre d'exemple, il peut s'agir d'une carte à puce, d'une clef dite USB (acronyme pour « Universal Serial Bus » en langue anglaise), d'un jeton (ou « token » en langue anglaise) ou d'un dongle, par exemple, destiné à assurer un accès à son porteur à une zone d'accès restreint, à permettre une transaction et/ou à échanger des informations sensibles ou à diffusion restreinte. De tels dispositifs électroniques portables comportent un ou plusieurs circuits intégrés. Pour que les dispositifs électroniques portables soient sécurisés, il convient de sécuriser le ou les circuits intégrés qu'ils comportent.

Parmi les techniques de sécurisation de circuit intégré, il est connu une technique de sécurisation basée sur l'utilisation d'un réseau de connexions électriques reliant des émetteurs de signaux à des récepteurs correspondants. Selon une telle technique, le réseau de connexions électriques, les émetteurs et les récepteurs correspondants ainsi connectés sont assemblés directement sur le circuit intégré à sécuriser. Les émetteurs et récepteurs respectifs reliés par le réseau sont situés, face à face, sur des bords extrêmes opposés du circuit intégré ainsi sécurisé. Le réseau de connexions électriques couvre une surface maximale du circuit intégré. Un tel réseau présente des connexions électriques dont la continuité électrique pour chaque connexion est alors testée lors du fonctionnement du circuit intégré. Un tel test de continuité électrique, où une image électrique propre au réseau formé est générée, permet de vérifier l'intégrité du réseau. Si le circuit intégré détecte, en cours de fonctionnement, que la continuité électrique d'une connexion entre au moins l'un des émetteurs et son récepteur n'est plus effective, alors une tentative d'intrusion externe s'est produite. Après une détection d'une telle tentative d'intrusion, le circuit intégré peut se rendre invalide en tout ou partie pour interdire l'accès à des données sensibles.

Cependant, une telle solution présente un inconvénient majeur. En effet, la fabrication d'un circuit intégré ainsi sécurisé nécessite d'être prévue dès la conception du circuit intégré à sécuriser. En effet, pour incorporer le réseau de connexions électriques, cela entraîne des contraintes de positionnement des composants électroniques au sein du circuit intégré. En outre, pour chaque circuit à sécuriser, il est nécessaire de prévoir un temps de développement propre à la sécurisation.

### Exposé de l'invention :

L'invention a notamment pour objectif de pallier un tel inconvénient de l'état de la technique en fournissant un procédé de fabrication d'un système électronique sécurisé. Selon l'invention, un réseau de connexions électriques est porté par un circuit intégré à coupler à un circuit intégré à sécuriser, une image électrique du réseau est capturée après couplage, le système formé des deux circuits est configuré pour la comparer à une image électrique à capturer lors du fonctionnement du circuit intégré à sécuriser.

Plus particulièrement, l'invention est un procédé pour fabriquer un système électronique sécurisé à l'aide d'un dispositif de sécurisation rapporté sur au moins un premier circuit intégré.

Selon l'invention, le dispositif de sécurisation, formant un deuxième circuit intégré et comprenant au moins un réseau de connexions électriques, est utilisé pour être assemblé avec le premier circuit intégré, pour former le système. Puis, une image électrique de référence propre au réseau de connexions électriques du système formé est capturée. Le système formé est ensuite configuré, pour comparer une image électrique à capturer lors du fonctionnement du premier circuit intégré à l'image électrique de référence capturée.

Le principe général de l'invention repose donc sur une utilisation d'un circuit intégré à réseau de connexions électriques rapporté sur le circuit intégré à sécuriser, avant la capture d'une image électrique statique du réseau existant, suivie de la configuration du système pour comparer à une image électrique dynamique du réseau, c'est-à-dire lors du fonctionnement du système.

Le procédé de fabrication de l'invention constitue donc une nouvelle approche par rapport à la technique de fabrication connue.

On comprend, en effet, que l'utilisation d'un dispositif indépendant comportant le réseau de connexions électriques évite toute modification de la conception du circuit intégré à sécuriser.

La conception du circuit intégré à sécuriser est conservée et aucun de ses composants électroniques n'est à repositionner pour intégrer le réseau de connexions électriques, ce qui constitue une simplification de conception par rapport à l'état de la technique explicité plus haut.

Il convient de noter que l'image électrique de référence et toute image électrique capturées correspondent à une ou plusieurs caractéristiques électriques du réseau de connexions électriques existant avant puis après mise en fonctionnement du circuit intégré à sécuriser.

La détection d'une tentative d'intrusion externe s'effectue grâce à une constatation d'une image électrique dynamique différente d'une image électrique statique dite de référence sauvegardée au sein du système ainsi formé. Selon un autre aspect, l'invention est un dispositif de sécurisation apte à sécuriser au moins un premier circuit intégré.

Selon l'invention, le dispositif de sécurisation forme un deuxième circuit intégré et comprend au moins un réseau de connexions électriques, des moyens de capture d'images électriques propres au réseau, et des moyens de comparaison d'une image électrique capturée lors du fonctionnement du premier circuit intégré à une image électrique de référence préalablement capturée.

Le dispositif de sécurisation de l'invention comprend au moins un réseau de connexions électriques et constitue un autre circuit intégré indépendant du circuit intégré à sécuriser. Les moyens de capture du dispositif permettent de capturer une image électrique du réseau avant le fonctionnement du circuit intégré à sécuriser auquel il peut être associé, puis, au moins une autre image électrique du réseau pendant le fonctionnement du circuit intégré à sécuriser.

On entend par « fonctionnement du circuit intégré à sécuriser », la réalisation de sa ou ses fonctions prévues initialement, c'est-à-dire sans le deuxième circuit intégré portant le réseau de connexions électriques, et donc indépendamment du fait que l'on rapporte ou non le circuit intégré constituant le dispositif de sécurisation de l'invention.

Selon encore un autre aspect, l'invention est un système électronique sécurisé. Le système comporte le circuit intégré à sécuriser et un dispositif de sécurisation rapporté sur un tel circuit intégré.

Selon l'invention, le dispositif de sécurisation constituant un deuxième circuit intégré et comportant au moins un réseau de connexions électriques, le système comporte des moyens de capture d'images électriques propres au réseau de connexions électriques existant, des moyens de comparaison d'une image électrique capturée lors du fonctionnement du circuit intégré à sécuriser à une image électrique de référence capturée avant son fonctionnement.

On comprend ainsi que le système électronique associe deux circuits intégrés, dont l'un forme le dispositif de sécurisation du circuit intégré à sécuriser et l'autre forme le circuit à sécuriser même.

On note que l'intégrité du réseau de connexions électriques reflète celle du système ainsi formé. Ainsi, si une image électrique du réseau capturée après la mise en fonction du circuit intégré à sécuriser diffère d'une image électrique capturée avant la mise en fonction du circuit à sécuriser, alors un signal indiquant la constatation d'une telle différence est transmis du dispositif de sécurisation au circuit intégré à sécuriser. Le circuit intégré à sécuriser peut alors décider, selon une stratégie de protection prédéterminée, de l'action ou des actions à prendre pour rendre inaccessible des données dont il dispose et qui peuvent être sensibles.

### Description des figures des dessins :

D'autres caractéristiques et avantages de l'invention apparaîtront à la lecture de la description d'un unique mode de réalisation préférentiel de l'invention, donné à titre de simple exemple indicatif non limitatif et des dessins annexés, dans lesquels :
- la figure 1 présente un schéma simplifié d'un exemple d'un dispositif de sécurisation selon l'invention ;
- la figure 2 illustre un schéma d'une vue de dessus d'un exemple d'un dispositif de sécurisation à réseau de connexions électriques selon l'invention ;
- la figure 3 présente un organigramme d'un exemple d'un procédé selon l'invention ;
- la figure 4 illustre un schéma simplifié d'un exemple d'un système électronique sécurisé en cours de fabrication selon l'invention ; et
- la figure 5 présente un schéma simplifié d'une vue en coupe le système électronique sécurisé de la figure 4 après sa fabrication.

### Description d'un mode de réalisation particulier de l'invention :

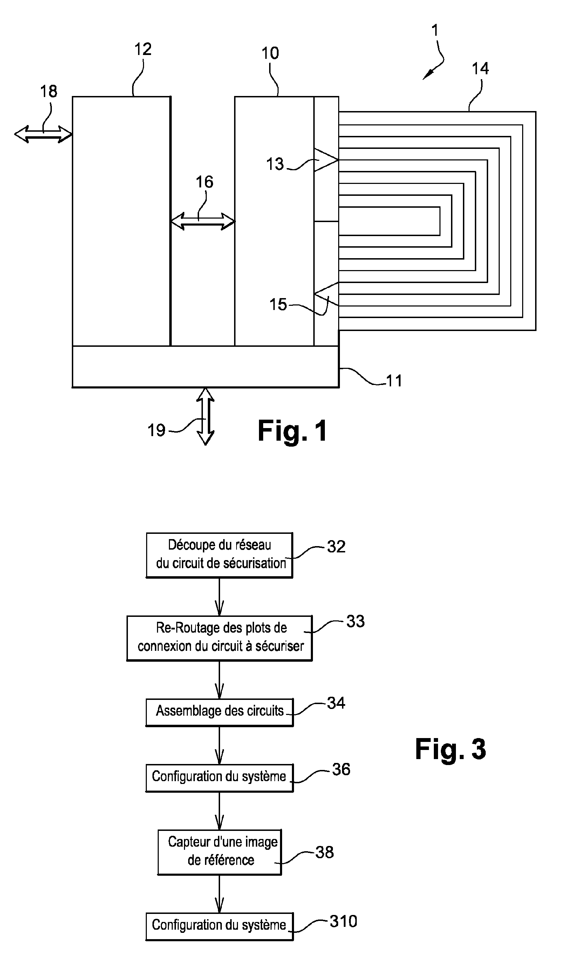

Comme présenté à titre d'exemple sur la figure 1, un dispositif de sécurisation 1 comporte, au sein d'un même circuit intégré dit circuit de sécurisation, un microcontrôleur 10, des émetteurs 13 et des récepteurs 15 de signaux électriques.

Le circuit de sécurisation est destiné notamment à coopérer avec un autre circuit intégré, dit circuit à sécuriser. Un tel circuit à sécuriser n'est pas suffisamment pourvu de moyens de protection pour faire face à toute tentative d'intrusion externe malintentionnée ou toute tentative de manipulation de signaux par un fraudeur. Ainsi, le circuit de sécurisation doté de moyens de protection apporte une fonction complémentaire de protection nécessaire à la sécurisation du circuit à sécuriser. Les deux circuits accouplés électriquement forment un système électronique sécurisé.

Le microcontrôleur 10 gère et contrôle l'ensemble des moyens compris sur le circuit de sécurisation 1. Le microcontrôleur 10 gère, en particulier, la sécurité du circuit de sécurisation 1, lit et écrit des données, au travers d'un bus 16 de liaison, au sein d'une ou plusieurs mémoires 12.

Selon une variante de réalisation, un ensemble de portes et/ou circuits logiques réalisent les fonctions décrites en relation avec le microcontrôleur 10.

Selon l'invention, le circuit de sécurisation 1 présente un ou plusieurs réseaux de connexions électriques 14 reliant des émetteurs 13 à des récepteurs 15 associés correspondants. Les récepteurs 15 reçoivent, depuis les émetteurs 13, des signaux émis sous contrôle du microcontrôleur 10 et identifiables selon certaines caractéristiques prédéfinies. La mémoire 12 est utilisée pour stocker toute image électrique résultante du réseau de connexions électriques 14 existant. Pour capturer une image, chaque émetteur 13 émet un signal prédéterminé et défini selon des caractéristiques précises délivrées par le microcontrôleur 10. Le récepteur 15 relié par une connexion électrique du réseau et associé à l'émetteur 13 reçoit, si la connexion électrique est valide, le signal prédéterminé. Si la connexion électrique n'est pas valide, c'est-à-dire si le signal reçu par le récepteur 15 n'est pas identique au signal émis par l'émetteur 13, l'image électrique résultante propre à l'ensemble des connexions électriques est altérée. Une comparaison de toute image électrique capturée postérieurement à celle de l'image électrique de référence avec cette dernière peut être effectuée. Une telle comparaison permet au circuit de sécurisation de détecter si une altération de l'image électrique de référence s'est produite.

Les émetteurs 13 sont aptes à transmettre, via les connexions électriques du réseau 14, des signaux sous le contrôle du microcontrôleur.

En tant que récepteurs 15, on peut notamment citer différents types de détecteurs, des détecteurs de tension, de courant, de fréquence, d'impulsion électrique contrôlée et/ou d'ondes électromagnétiques.

Une fonction de sécurisation propre au réseau existant est apportée par le circuit de sécurisation 1 au circuit à sécuriser. Il n'est pas nécessaire de modifier la conception du circuit à sécuriser, ce qui simplifie sa conception par rapport à la solution technique connue et décrite plus haut. Il est clair que le circuit de sécurisation 1 est conçu pour ne pas perturber le fonctionnement du circuit à sécuriser. En d'autres termes, le circuit à sécuriser exerce la ou les mêmes fonctions que celles exercées seul.

Optionnellement, le microcontrôleur 10 est configuré pour réaliser, au travers du réseau de connexions électriques, un moyen de rayonnement électromagnétique vers l'extérieur, sans rayonner vers le circuit à sécuriser.

Le microcontrôleur 10 contrôle périodiquement, et, en permanence, l'état du réseau de connexions électriques 14 lors du fonctionnement du système. Le contrôle est réalisé, par scrutation, soit par interruption matérielle, soit par interrogation cyclique d'un registre modifiable suite à une altération du réseau de connexions électriques 14.

Si une altération de l'image électrique par rapport à celle de référence a été constatée, le microcontrôleur 10 est configuré pour générer et transmettre un message d'alerte au circuit à sécuriser pour l'en informer.

Optionnellement, le microcontrôleur 10 peut également être configuré pour générer et transmettre au circuit à sécuriser un message indiquant que l'image électrique dernièrement capturée est identique à l'image électrique de référence.

En outre, le circuit de sécurisation 1 inclut optionnellement un ou plusieurs mécanismes de sécurité 11, tels que des circuits analogiques, par exemple des détecteurs de température, de pression, de lumière etc... De tels mécanismes de sécurité 11 sont prévus pour détecter la présence de différentes variations anormales de l'environnement du dispositif de sécurisation 1. Les mécanismes de sécurité 11 permettent de détecter une tentative d'intrusion et/ou de perturbation d'origine malveillante depuis l'extérieur au circuit de sécurisation 1. Les mécanismes de sécurité 11 sont reliés via divers plots de connexion électriques (non représentés) avec l'extérieur.

Des plots de connexion électriques permettent au circuit de sécurisation 1 notamment d'échanger, avec l'extérieur, au travers d'un bus 19 bi-directionnel de communication, divers signaux d'entrée/sortie.

La ou les mémoires 12 sont internes au circuit de sécurisation 1. Selon une variante (non représentée), de telles mémoires sont prévues, par exemple, au sein du circuit à sécuriser. La ou les mémoires 12 incluent, par exemple, une mémoire de type non volatile, par exemple de type flash destinée à sauvegarder des données de manière permanente, c'est-à-dire qui subsistent malgré une ou plusieurs extinctions de l'alimentation du circuit de sécurisation 1. La mémoire 12 non volatile est notamment prévue pour stocker des données propres à toute image électrique relative au réseau de connexions électriques 14 existant lors de sa capture, dont l'image électrique de référence et au moins la dernière image électrique capturée suite à la mise en fonctionnement du circuit à sécuriser. La mémoire 12 comporte également un ou des programmes d'instructions utilisés pour initialiser, et configurer la communication à établir entre le circuit de sécurisation 1 et le circuit à sécuriser.

En tant que programme, on peut citer un programme d'instructions qui se charge à l'initialisation (ou « auto-boot loader » en langue anglaise), c'est-à-dire dès la première mise sous tension du système formé par le circuit de sécurisation et le circuit à sécuriser. Il peut également s'agir d'un code à exécuter par le microcontrôleur 10 et éventuellement d'un code à exécuter par un processeur du circuit à sécuriser. En tant que données, la mémoire 12 stocke, par exemple, des données de sécurité, telles que des clefs, et/ou des données nécessaires au processeur du circuit à sécuriser.

Ainsi, les deux circuits intégrés peuvent, suite à leur couplage électrique, coopérer pour sécuriser le système formé. Les données de la mémoire 12 sont accessibles depuis l'extérieur du circuit de sécurisation 1 directement via un bus 18 bi-directionnel d'accès à la mémoire, c'est-à-dire sans avoir à faire transiter les données via le microcontrôleur 10. Le système formé, le bus 18 bi-directionnel d'accès direct à la mémoire 12 est sécurisé du fait que seul le circuit à sécuriser accède à la mémoire. Un tel accès unique à la mémoire permet une exécution de code sécurisé. De plus, l'accès à la mémoire 12 via le bus 18 bi-directionnel au travers du circuit à sécuriser permet également une personnalisation du circuit de sécurisation plus rapide, c'est-à-dire un chargement d'un programme d'instructions à haut débit destiné au circuit de sécurisation, si le circuit à sécuriser a pour fonction une augmentation du débit des données.

Selon une variante, la mémoire du circuit de sécurisation n'est pas directement accessible depuis le circuit à sécuriser. Selon une telle variante, il est nécessaire d'accéder à la mémoire du circuit de sécurisation, via son microcontrôleur. Le microcontrôleur contrôle les données à lire et/ou écrire au sein de la mémoire du circuit de sécurisation. C'est au travers d'un autre bus 19 bi-directionnel de communication avec le seul circuit à sécuriser, et par l'intermédiaire du microcontrôleur que l'accès à une telle mémoire est rendu possible.

La mémoire 12 peut également comprendre une ou plusieurs mémoires volatiles, du type RAM (acronyme pour « Random Access Memory »), pour stocker des données de manière temporaire.

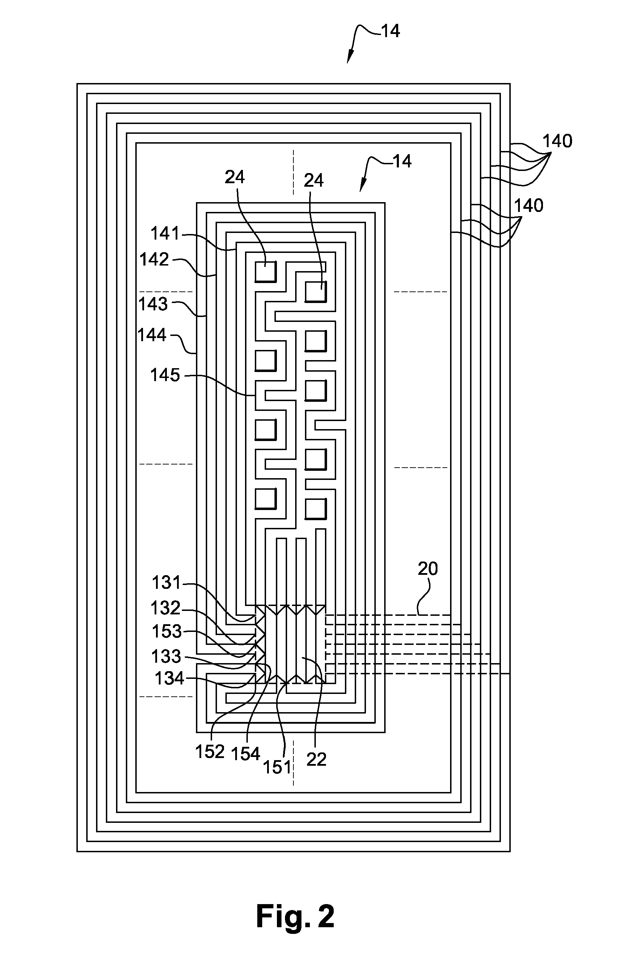

Comme représenté sur la figure 2, en vue de dessus, le dispositif de sécurisation 1 constitue un circuit intégré muni d'un réseau de connexions électriques 14.

De manière avantageuse, le réseau de connexions électriques 14 est configuré de sorte qu'au moins une connexion électrique 140 peut être découpée. Il est à noter que la découpe d'une telle connexion électrique 140 n'entraîne pas celles d'autres connexions électriques valides. Il est clair qu'une découpe d'une connexion électrique invalide la connexion électrique entre un émetteur et son récepteur. L'image électrique résulte des connexions électriques restées valides suite à une ou plusieurs découpes. Ainsi, les dimensions du circuit de sécurisation 1 peuvent être adaptées à celles du circuit à sécuriser ou d'une zone sensible du circuit à sécuriser. En d'autres termes, le circuit de sécurisation 1 est physiquement et électriquement configurable en fonction du circuit à sécuriser. On comprend qu'une telle configuration par découpe modifie la structure du réseau de connexions électriques restant valides.

Il est clair qu'un même circuit de sécurisation 1 peut être adapté à tout circuit intégré à sécuriser sans avoir à modifier la conception de ce dernier.

Une partie représentée symboliquement par un carré 22 dissimule l'ensemble des moyens compris au sein du circuit de sécurisation 1, dit unité logique infra.

L'unité logique inclut le microcontrôleur 10 (ou des portes logiques câblées correspondantes), les émetteurs 13, les récepteurs 15 et la mémoire 12 décrits précédemment. De préférence, ces différents éléments sont implantés de manière aléatoire et imbriquée au sein de l'unité logique, pour éviter toute tentative de fraude.

Le carré 22 présente sur son côté gauche, quatre triangles. Chacun des triangles présente un côté vertical gauche. Le milieu du côté vertical gauche d'un triangle représente symboliquement un point de sortie d'un émetteur. Chaque extrémité du côté gauche d'un triangle représente symboliquement un point d'entrée d'un récepteur.

Différentes connexions électriques 141, 142, 143 et 144 relient des émetteurs 131, 132, 133 et 134 à des récepteurs 151, 152, 153 et 154 correspondants.

Les connexions électriques 141, 142, 143 et 144 présentent chacune une forme géométrique à au moins quatre côtés rectilignes, pour relier un émetteur au récepteur associé. Ainsi, les formes géométriques représentées par des connexions électriques peuvent être de formes diverses et variées. A titre d'exemple, une connexion électrique 145 présente également une forme géométrique à de multiples côtés (d'un nombre bien supérieur à quatre), dont certains côtés serpentent entre des plots de connexion 24. On peut avoir des connexions électriques présentant une forme au moins en partie avec des lignes courbes.

Les plots de connexion 24 sont destinés à relier le circuit de sécurisation à des plots de connexion correspondants prévus sur le circuit à sécuriser. Comme décrit plus bas, les plots de connexion 24 du circuit de sécurisation sont reliés à des plots correspondants du circuit à sécuriser, éventuellement, au travers d'une interface de connexions présentant des connexions électriques obtenues suite à une opération de re-routage.

Selon une caractéristique avantageuse de l'invention, l'unité logique se situe à l'écart des bords du circuit intégré de sécurisation, où l'unité logique est localisée au voisinage du centre du réseau de connexions électriques du circuit de sécurisation 1. En effet, de cette manière, une découpe du circuit de sécurisation 1 n'endommage ni certaines connexions électriques 141, 142, 143 et 144 du réseau 14 ni l'unité logique 22 qui est nécessaire à la capture d'images électriques du réseau de connexions électriques. En d'autres termes, seules certaines connexions électriques du réseau 14 sont invalidées par une ou plusieurs découpes.

On rappelle que la solution technique connue présente des émetteurs et des récepteurs correspondants situés sur des bords extrêmes directement sur un circuit à sécuriser, dans un but de couverture maximale par le réseau de connexions électriques de sa surface. Une telle structure du réseau de connexions électriques présente des lignes de surface parallèles interdisant une découpe en largeur et/ou en longueur des connexions électriques. En effet, une telle découpe invalide l'ensemble des connexions électriques du réseau rendant le réseau de connexions électriques inopérant, c'est-à-dire non fonctionnel.

Chaque connexion électrique du réseau est réalisée par un dépôt de matériau(x) électriquement conducteur(s) reliant un émetteur à son récepteur. Comme matériau(x) électriquement conducteur(s), on peut notamment citer un métal, une encre, et/ou une résine. Le dépôt est, par exemple, effectué par une technique de sérigraphie et/ou de photolithographie.

On comprend que plus le nombre de connexions électriques est grand, plus le circuit de sécurisation présente de couches, pour relier des émetteurs et des récepteurs entre eux. Ainsi, les connexions électriques 140 représentées symboliquement en périphérie par des rectangles sont des connexions électriques ouvertes reliant, au sein de sous-couches (une par rectangle), via des liaisons 20 représentées en pointillés, certains émetteurs à des récepteurs associés en surface.

La figure 3 présente, sous la forme d'un organigramme, un mode de réalisation particulier du procédé selon l'invention pour fabriquer un système électronique sécurisé.

Par souci de simplification, le mode de réalisation décrit ci-dessous est explicité pour un circuit de sécurisation rapporté sur un unique circuit à sécuriser. Il est clair cependant que le principe de fabrication explicité plus bas s'applique également à l'association d'un circuit de sécurisation à plusieurs circuits à sécuriser montés les uns sur les autres.

Selon une caractéristique avantageuse de l'invention, le circuit de sécurisation comporte un réseau de connexions électriques présentant une structure physiquement configurable. Ainsi, contrairement à la solution technique connue, le circuit de sécurisation est adaptable au circuit à sécuriser.

Pour configurer physiquement le circuit de sécurisation, lors d'une première étape, on découpe 32 une partie du réseau de connexions électriques. Lors de la découpe du réseau, certaines connexions électriques se trouvent définitivement invalidées, empêchant la circulation d'un courant électrique entre un ou des émetteurs et au(x) récepteur(s) précédemment reliés.

Il est clair qu'une telle découpe du réseau de connexions électriques n'est pas obligatoire. Une telle découpe est cependant intéressante notamment pour adapter les dimensions du circuit de sécurisation « universel » sensiblement à celles d'une zone sensible du circuit à sécuriser, par exemple une surface couvrant le contrôleur du circuit à sécuriser. L'étape de découpe 32 est réalisée, par exemple, par sciage avec ou sans chemins de sciage prédéterminés sur le circuit de sécurisation. La réalisation de sciage sans chemins de sciage est, par exemple, effectuée par un alignement fixé durant une opération de photolithographie nécessaire à une étape de re-routage 33 des plots de connexion explicitée plus bas.

Suite à l'étape de découpe 32, on effectue une autre étape optionnelle de re-routage 33 des plots de connexion du circuit à sécuriser, permettant d'éviter de modifier le routage présent au sein du circuit à sécuriser. Une telle étape de re-routage 33 consiste à prévoir une interface de connexion entre les deux circuits. L'interface est utilisée pour qu'au moins certains plots de connexion prévus sur le circuit de sécurisation se trouvent déportés sur une zone en regard des plots de connexion du circuit à sécuriser, pour les relier électriquement.

Une fois la formation du système achevée, les plots de connexion relatifs au circuit à sécuriser concernés par le re-routage et les plots de connexion relatifs au circuit de sécurisation se trouvent intercalés entre les circuits et ne sont pas accessibles de l'extérieur du système ainsi formé. Par ailleurs, l'étape de re-routage 33 consiste, par exemple, à relier certains autres plots de connexion ménagés sur le circuit à sécuriser vers d'autres plots de connexion accessibles depuis l'extérieur du système formé. De tels plots de connexion accessibles depuis l'extérieur du système sont utilisés notamment pour l'alimentation des deux circuits et l'accès au circuit à sécuriser.

On comprend que le re-routage apporte un degré de liberté supplémentaire, afin de re-positionner des plots de connexion à des endroits recherchés notamment soit pour interdire leur accès depuis l'extérieur du système formé, soit au contraire pour en autoriser l'accès depuis l'extérieur du système formé.

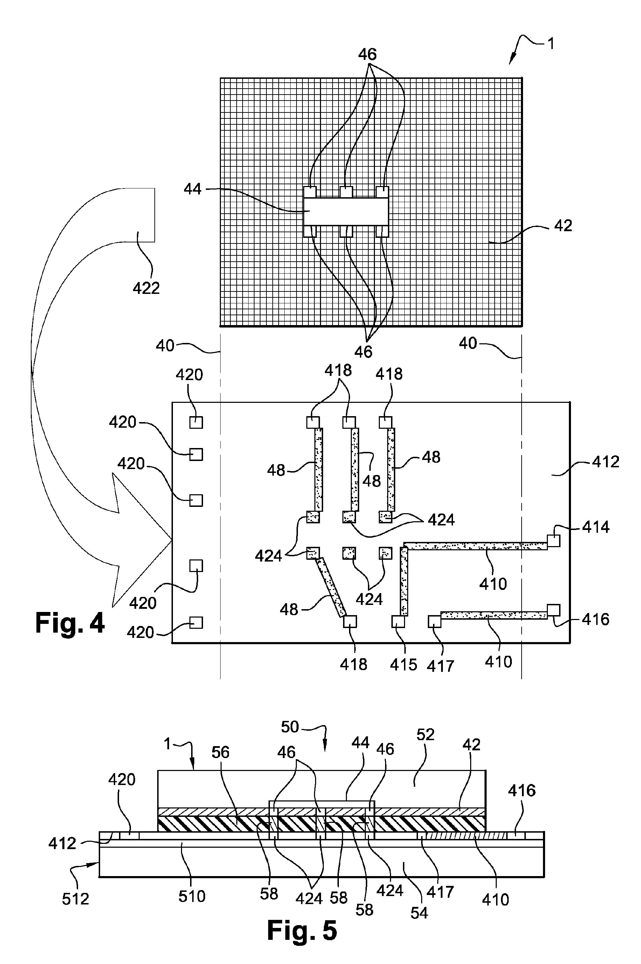

Après de telle(s) étape(s) optionnelle(s), on assemble 34 les deux circuits entre eux pour former un système sécurisé correspondant. Un assemblage des deux circuits est explicité plus bas en détails en relation avec la figure 4. L'assemblage 34 des deux circuits consiste à coupler électriquement les deux circuits entre eux. Le circuit de sécurisation est rapporté sur le circuit à sécuriser. Les plots de connexion relatifs au circuit de sécurisation sont reliés à ceux prévus à cet effet au sein du circuit à sécuriser. De manière optionnelle, on prévoit une couche de scellement additionnelle entre les deux circuits, pour augmenter la solidité du système ainsi formé. Suite à l'assemblage des deux circuits, le réseau de connexions électriques du circuit de sécurisation couvre au moins en partie la surface du circuit à sécuriser. Les plots de connexion du circuit de sécurisation sont alors non accessibles depuis l'extérieur du système. Seul, le circuit à sécuriser peut échanger des données, via les plots de connexion du circuit de sécurisation, avec ce dernier.

L'assemblage réalisé, on configure 36 le système formé par les deux circuits assemblés.

Pour configurer le système formé, à l'initialisation, c'est-à-dire lors d'une première mise sous tension, le circuit à sécuriser comprend, au sein d'une mémoire, un programme de chargement qui autorise un transfert du programme à exécuter, par exemple, vers la mémoire de type non volatile du circuit de sécurisation. Puis, on charge, au travers d'un port d'entrée/sortie accessible depuis l'extérieur du système, un code système destiné au microcontrôleur du circuit de sécurisation. Ce chargement peut avoir lieu de manière chiffrée. L'activation de ce chargement est sécurisée, par exemple, en validant une comparaison d'un mot de contrôle à une adresse de chargement prédéfinie et initialisée à la mise sous tension. Lors d'une autre mise sous tension, le microcontrôleur du circuit à sécuriser ne pointe plus sur l'adresse de chargement prédéfinie mais sur l'adresse du code système dernièrement chargé. Le microcontrôleur du circuit à sécuriser initialise les deux circuits du système, par exemple en validant les différents points d'accès à chacun des deux circuits.

La mémoire du circuit de sécurisation stockant des données de paramétrage d'une communication à établir entre les circuits, le circuit de sécurisation effectue le paramétrage de la communication entre le circuit de sécurisation et le circuit à sécuriser. La communication est effectuée au travers des plots de connexion du circuit de sécurisation couplés à des plots de connexion correspondants du circuit à sécuriser. Les deux circuits accouplés peuvent communiquer, et notamment échanger des données relatives à un résultat de comparaison à l'image électrique de référence d'une image électrique capturée après la mise en fonctionnement effective du circuit à sécuriser. Pour capturer une image électrique propre au réseau, le microcontrôleur du circuit de sécurisation effectue un paramétrage des signaux à transmettre par les émetteurs, au travers du réseau de connexions électriques valides, à recevoir par les récepteurs correspondants. De tels signaux sont par exemple des trames aléatoires générées par le microcontrôleur du circuit de sécurisation.

Puis, le circuit de sécurisation capture 38, lors d'un autotest, une image électrique de référence du réseau de connexions électriques demeurant valides. L'image électrique de référence du réseau de connexions est celle du réseau de connexions électriques, en l'état, dès la mise sous tension du réseau de connexions. L'image de référence détermine la surface utile du réseau et constitue l'image électrique propre au réseau de connexions électriques du système juste avant son fonctionnement. C'est à l'image électrique de référence que toute image électrique ultérieurement capturée est à comparer. Pour ce faire, l'image électrique de référence est sauvegardée au sein d'une mémoire du système formé. De préférence, l'image électrique de référence est stockée au sein d'une mémoire non volatile du circuit de sécurisation, puis verrouillée, c'est-à-dire non accessible depuis l'extérieur du circuit de sécurisation et donc notamment non modifiable.

Ensuite, on configure 310, plus avant, le système formé. Pour ce faire, les éventuels détecteurs de sécurité, par exemple, de fréquence, de température, de lumière, sont initialisés par l'intermédiaire d'un démasquage de registres d'état. Puis, un mécanisme d'interruption propre à chaque mécanisme de sécurité dont notamment celui de contrôle de l'image électrique propre au réseau est activé. Le mécanisme de contrôle de l'image électrique propre au réseau activé, la configuration permet de comparer toute image électrique capturée lors du fonctionnement effectif du circuit à sécuriser. Le mécanisme de sécurité relatif au contrôle du réseau de connexions électriques est, dès lors, fonctionnel. Au moins une autre image électrique du réseau de connexions électriques 14 existant est capturée ultérieurement, par exemple, juste après la mise en fonctionnement effectif du circuit à sécuriser.

Lors d'une phase de personnalisation optionnelle, on continue à configurer le système. Pour ce faire, on charge depuis l'extérieur du système formé, au travers des plots de connexion accessibles depuis l'extérieur, au sein d'une mémoire du circuit à sécuriser et/ou au sein d'une mémoire du circuit de sécurisation, un programme d'instruction(s) à exécuter et/ou de données utiles au fonctionnement prévu pour le circuit à sécuriser.

De manière optionnelle, on prévoit une étape additionnelle de chargement de données de sécurité, telle qu'un certificat d'authentification et/ou une clef de cryptage de données, au sein d'une mémoire comprise au sein du circuit de sécurisation.

Le circuit de sécurisation est dédié à une fonction de sécurisation du système formé, indiquant notamment au circuit à sécuriser, une altération de l'image électrique par rapport à celle de référence.

Toute tentative d'intrusion malintentionnée ou tentative de manipulation de signaux se traduit par une altération de l'image électrique propre au réseau existant. Par le biais d'une telle altération, une telle tentative est détectée.

Si une altération de l'image électrique du réseau est détectée, alors le circuit de sécurisation transmet, sous la forme d'une interruption, un message d'alerte correspondant au circuit à sécuriser. Le circuit à sécuriser décide, selon une stratégie de sécurité prédéfinie, la ou les actions à mettre en oeuvre. Le circuit à sécuriser peut prendre des mesures de protection des données sauvegardées au sein du circuit de sécurisation et/ou du circuit à sécuriser et/ou des données que le circuit à sécuriser est en train de traiter. Par exemple, le circuit à sécuriser arrête le traitement en cours et efface, au moins en partie, les données sensibles stockées, pour rendre incohérentes les données stockées et/ou en cours de traitement. Ainsi, un fraudeur n'est pas à même de retrouver une ou plusieurs données sensibles stockées et/ou en cours de traitement au sein du circuit à sécuriser.

Le circuit intégré à sécuriser remplit au moins une fonction, par exemple, assurer une communication de données à haute vitesse, de type USB (acronyme pour « Universal Serial Bus » en langue anglaise), de type MMC (acronyme pour « Multi-Media CArd » en langue anglaise) et/ou équivalent.

En résumé, on peut adapter les dimensions du circuit de sécurisation muni de mécanismes de protection à celles du circuit à sécuriser, interconnecter électriquement les deux circuits, configurer le système et le personnaliser en fin d'étape de configuration.

Le circuit à sécuriser exerce alors au moins une fonction applicative. Le circuit de sécurisation est personnalisé en fonction d'un niveau de sécurité requis par la ou les fonctions applicatives éventuellement en exécutant une tâche sécuritaire, telle, par exemple, après une initialisation, effectuer une ré-initialisation.

Le circuit de sécurisation comprend avantageusement une mémoire adressable non volatile de type Flash ou EEPROM (acronyme pour « Electrically Erasable Programmable Read Only Memory » en langue anglaise).

On comprend qu'un tel procédé permet au système formé par les deux circuits accouplés, de capturer, outre l'image électrique de référence capturée lors de sa fabrication, au moins une autre image électrique. Il peut s'agir d'une image électrique capturée à intervalle régulier, par exemple, chaque seconde, dès la mise en fonctionnement du système.

De cette manière, en cours de fonctionnement, le système ainsi configuré détecte, dès qu'une image électrique dernièrement capturée est différente de l'image électrique de référence, à l'aide du circuit de sécurisation, une altération de l'image électrique propre au réseau de connexions électriques existant à l'origine, c'est-à-dire dès le couplage des deux circuits.

Un contrôle périodique et permanent de l'état ou de l'intégrité du réseau de connexions électriques du système sécurisé en cours de fonctionnement peut être effectué. Pour ce faire, le circuit de sécurisation portant le réseau et pouvant être autonome pour détecter une altération ou d'une non-altération de l'image électrique du réseau est actif en cours de fonctionnement du système formé.

La figure 4 montre un système électronique sécurisé en cours de formation, juste avant l'assemblage d'un dispositif de sécurisation 1 sur un circuit à sécuriser.

Le dispositif de sécurisation 1 est muni d'une grille de protection 42 pour, d'une part, protéger physiquement, sous forme d'écran anti-intrusion physique, le système en cours de formation, et d'autre part, constituer le réseau de connexions électriques reliant des émetteurs à leurs récepteurs. La grille de protection 42 couvre le circuit intégré de sécurisation 44. Le dispositif de sécurisation 1 rapporté sur le circuit à sécuriser (non représenté) joue un rôle de « capot ou bouclier de sécurisation » pour le circuit à sécuriser. Le dispositif de sécurisation 1 apporte donc un aspect sécuritaire physique et électrique sans nécessiter une personnalisation coûteuse du circuit à sécuriser par rapport à la solution technique connue. Le dispositif de sécurisation 1 peut s'adapter à de multiples types de circuits à sécuriser, et peut constituer un composant « générique » ou « standard » de sécurisation.

Pour former le système électronique, on utilise une technique de couplage face à face (encore dite « flip chip » en langue anglaise). Une telle technique consiste à retourner, dans le sens d'une flèche 422, le dispositif de sécurisation 1, de sorte à présenter la grille de protection 42 en regard d'une interface 412 de connexion. L'interface 412 de connexion s'interpose entre les deux circuits. L'interface 412 de connexion présente, par exemple, des plots de connexion accessibles depuis l'extérieur du circuit à sécuriser avant le couplage des circuits.

Suite à l'opération de retournement, des plots de connexion 46 du circuit de sécurisation précédemment accessibles depuis l'extérieur du circuit de sécurisation 44 deviennent non accessibles, et sont amenés en regard des plots de connexion 424 correspondants du circuit à sécuriser.

Dans l'exemple illustré sur la figure 4, quatre plots de connexion 424 sont reliés, au travers de connexions électriques 48 résultant d'une opération de re-routage, à quatre plots de connexion 418 du circuit à sécuriser. Les connexions électriques 48 ajoutés permettent de placer le circuit de sécurisation 44 du dispositif de sécurisation 1 sur une zone de couverture prédéterminée notamment en fonction de l'emplacement des données sensibles du circuit à sécuriser. Les quatre plots de connexion 418 du circuit à sécuriser permettent, via les plots de connexion 46 du circuit de sécurisation, notamment l'échange de données entre les deux circuits intégrés. L'interface 412 comporte également deux plots de connexion 415 et 417 reliés électriquement, via deux autres connexions électriques 410, respectivement à d'autres plots de connexion 414 et 416. Ces derniers sont accessibles depuis l'extérieur du système formé, et correspondent par exemple à une interface de communication haute vitesse de type USB avec deux bornes D- et D+.

Une fois le système formé en rapportant selon des lignes d'alignement 40 du dispositif de sécurisation 1 sur le circuit à sécuriser, il est clair que les plots de connexion référencés 415, 417, 418 et 424 du circuit à sécuriser, les plots de connexion référencés 46 du circuit de sécurisation 44 ne sont plus accessibles de l'extérieur du système.

L'interface 412 de connexion comporte cinq autres plots de connexion 420 accessibles également depuis l'extérieur du système une fois formé. Les cinq plots de connexion 420 correspondent, par exemple, à une interface ISO 7816 (acronyme pour « International Organization for Standardization » en langue anglaise) à deux broches de connexion pour l'alimentation (pour la masse ou GND pour « Ground » en langue anglaise et la tension d'alimentation Vcc), une broche de connexion pour une ré-initialisation du circuit à sécuriser (ou « Reset » en langue anglaise), une broche de connexion pour la transmission d'un signal d'horloge (ou « CLK » pour « clock » en langue anglaise), et une broche de connexion entrée/sortie GPIO (acronyme pour «General Purpose Input/output » en langue anglaise) configurable de manière logicielle.

Selon une variante de réalisation, seuls deux des plots de connexion 420 sont utilisés, par exemple, pour établir une liaison avec deux extrémités d'une antenne présente sur un circuit à sécuriser présentant une interface de communication dite sans contact du type ISO 14443.

Selon une autre variante de réalisation, un unique plot de connexion 420 est utilisé, par exemple, pour établir une liaison avec un connexion présente sur un circuit à sécuriser présentant une interface de communication appelée SWP (acronyme pour « Single Wire Protocol » en langue anglaise).

Le dispositif de sécurisation 1 générique est capable de protéger, par exemple, un contrôleur « standard », en tant que circuit à sécuriser. Il peut s'agir d'un contrôleur de mémoire de type Flash à communication haute vitesse, de type USB ou autre, ayant, par exemple, un port d'entrée/sortie, de la mémoire RAM, de la mémoire ROM stockant un programme de chargeur à l'initialisation (ou « autoboot loader » en langue anglaise), et un bus de mémoire étendu.

La figure 5 présente une vue en coupe d'un exemple du système électronique sécurisé formé 50.

Le système électronique sécurisé 50 présente plusieurs étages résultant de l'assemblage du dispositif de sécurisation 1 sur un circuit à sécuriser 512 qui sont décrits infra de haut en bas.

Le dispositif de sécurisation 1 comprend un premier substrat de silicium 52 porteur de la partie active du circuit de sécurisation 44 et de la grille de protection 42 reliant les émetteurs et les récepteurs entre eux. La grille de protection 42 couvre complètement la partie active du circuit de sécurisation 44 et au moins partiellement le premier substrat de silicium 52. Par partie active du circuit de sécurisation 44, il faut entendre notamment un microprocesseur et/ou une unité logique gérant et contrôlant la capture d'une image électrique de référence et toute image électrique capturée ultérieurement. La partie active du circuit de sécurisation 44 couvre, quant à elle, les plots de connexion 46 inaccessibles depuis l'extérieur du système électronique sécurisé 50. La grille de protection 42 se trouve dans le même plan que les plots de connexion 46 du circuit de sécurisation 44.

Le dispositif de sécurisation 1 surmonte un joint de scellement 56 surmontant lui-même le circuit à sécuriser 512. Le joint de scellement 56 est électriquement isolant, pour éviter de court-circuiter les connexions résultant de l'opération de re-routage et la grille de protection 42.

Des traverses 58 ou vias en matériau électriquement conducteur relient les plots de connexion 46 du circuit de sécurisation 44 aux plots de connexion 424 portés par l'interface de connexion 412. Les traverses 58 sont, par exemple, constitués par des inserts métalliques. Les traverses 58 permettent l'échange de données entre le circuit de sécurisation 44 et le circuit à sécuriser 512. L'échange de données peut comprendre des données relatifs à un signal d'alerte issu du circuit de sécurisation 44 à destination du circuit à sécuriser 512, et un éventuel signal issu du circuit à sécuriser 512 à destination du circuit de sécurisation 44 en réponse au signal d'alerte.

Les plots de connexion 416 et 420 portés par l'interface de connexion 412 sont accessibles depuis l'extérieur du système sécurisé 50. A l'inverse, des plots de connexion 417 sont reliés au travers des connexions 410 électriques résultant de l'opération de re-routage aux plots de connexion 416 accessibles depuis l'extérieur du système électronique sécurisé 50.

L'interface de connexion 412 se trouve sur le même plan que les plots de connexion 420 accessibles depuis l'extérieur du système 50, les plots de connexion 424 en liaison électrique avec une partie active 510 du circuit à sécuriser 512, et les plots de connexion 416 accessibles depuis l'extérieur du système et reliés avec des plots de connexion en liaison électrique avec le circuit à sécuriser 512. L'interface de connexion 412 est intercalée entre le joint de scellement 56 et la partie active 510 du circuit à sécuriser 512.

La partie active 510 surmonte un deuxième substrat de silicium 54 porteur du circuit à sécuriser 512.

Un tel système sécurisé 50 est, par exemple, intégré au sein d'un objet électronique portable, tel qu'une carte à puce.

## Revendications

1. Procédé (30) pour fabriquer un système électronique sécurisé à l'aide d'un dispositif de sécurisation rapporté sur au moins un premier circuit intégré,
**caractérisé en ce que**, le dispositif de sécurisation formant un deuxième circuit intégré (1) qui comporte au moins un réseau de connexions électriques (14), le procédé comprend les étapes suivantes :
- assembler (34) le dispositif de sécurisation et le premier circuit intégré, pour former le système,
- capturer (38) une image électrique de référence propre au réseau de connexions électriques du système formé,
- configurer (310) le système formé, pour comparer une image électrique à capturer lors du fonctionnement du premier circuit intégré à l'image électrique de référence.

2. Procédé selon la revendication 1, dans lequel le procédé comprend, en outre, avant l'assemblage du système, une étape (32) de découpe d'une partie du réseau de connexions électriques du dispositif de sécurisation.

3. Procédé selon la revendication 2, dans lequel l'étape (32) de découpe d'une partie du réseau de connexions électriques consiste à découper le réseau de connexions électriques sensiblement aux dimensions d'une zone sensible du premier circuit intégré.

4. Procédé selon l'une des revendications 1 à 3, dans lequel, le premier circuit intégré présentant au moins un premier plot de connexion électrique, le dispositif de sécurisation présentant au moins un deuxième plot de connexion électrique destiné à être relié au premier plot de connexion électrique, l'étape de configuration comprend une étape de chargement de données de paramétrage d'une liaison entre les premier et deuxième plots de connexion électrique au sein d'au moins une mémoire comprise au sein du dispositif de sécurisation, de sorte que le système électronique formé réalise au moins une fonction de communication prédéterminée entre le dispositif de sécurisation et le premier circuit intégré.

5. Procédé selon la revendication 4, dans lequel le procédé comprend une étape de chargement, au sein d'au moins une mémoire comprise au sein du système électronique sécurisé, d'au moins une instruction à exécuter et/ou d'au moins une donnée utile pour le fonctionnement du premier circuit intégré.

6. Procédé selon l'une des revendications 1 à 5, dans lequel le réseau de connexions électriques du dispositif de sécurisation est réalisé par un dépôt d'au moins une couche de métal sur le deuxième circuit intégré.

7. Dispositif de sécurisation (1) apte à sécuriser au moins un premier circuit intégré,
**caractérisé en ce que** le dispositif forme un deuxième circuit intégré et comprend :
- au moins un réseau de connexions électriques (14),
- des moyens de capture d'images électriques (12, 13, 15) propres au réseau de connexions électriques,
- des moyens de comparaison (10) d'une image électrique capturée lors du fonctionnement du premier circuit intégré à une image électrique de référence préalablement capturée.

8. Dispositif selon la revendication 7, dans lequel au moins une connexion électrique (140) du réseau est apte à être découpée.

9. Dispositif selon la revendication 7 ou 8, dans lequel le dispositif comprend des moyens de communication et de traitement de l'information (10) aptes à être configurés pour réaliser un moyen de transmission d'un message prédéfini en fonction du résultat de la comparaison entre une image électrique capturée lors du fonctionnement du premier circuit intégré et l'image électrique de référence.

10. Dispositif selon l'une des revendications 7 à 9, dans lequel les moyens de capture d'images électriques comprennent au moins un dispositif d'émission d'un signal électrique en entrée du réseau de connexions électriques et au moins un dispositif de détection du signal électrique en sortie du réseau de connexions électriques, le dispositif de détection étant choisi parmi un ou plusieurs des dispositifs de détection suivants :
- de tension ;
- de courant ;
- de fréquence ;
- de pulsion électrique ; et/ou
- d'ondes électromagnétiques.

11. Dispositif selon l'une des revendications 7 à 10, dans lequel le dispositif comprend des moyens de communication et de traitement de l'information (10) et/ou au moins une mémoire (12) sensiblement localisés au voisinage du centre du réseau de connexions électriques du dispositif.

12. Dispositif selon la revendication 11, dans lequel ladite mémoire est une mémoire non volatile (12).

13. Dispositif selon la revendication 12, dans lequel la mémoire non volatile sauvegarde au moins une donnée propre à l'image électrique de référence et/ou au moins une image électrique capturée lors du fonctionnement du premier circuit intégré.

14. Dispositif selon l'une quelconque des revendications 7 à 13, dans lequel le réseau de connexions électrique est constitué d'au moins une couche de matériau électriquement conducteur déposée sur le deuxième circuit intégré.

15. Dispositif selon l'une quelconque des revendications 7 à 14, dans lequel les moyens de capture d'images électriques (13, 15, 12) sont localisés au voisinage du centre du réseau de connexions électriques du dispositif.

16. Système électronique sécurisé (40) comprenant un premier circuit intégré à sécuriser et un dispositif de sécurisation rapporté sur le premier circuit intégré,
**caractérisé en ce que** le dispositif de sécurisation forme un deuxième circuit intégré et comporte au moins un réseau de connexions électriques (14),
et, dans lequel le système comprend :
- des moyens de capture d'images électriques (13, 15, 12) propres au réseau de connexions électriques,
- des moyens de comparaison (10) d'une image électrique capturée lors du fonctionnement du premier circuit intégré à une image électrique de référence préalablement capturée.

17. Système selon la revendication 16, dans lequel le dispositif de sécurisation comprend des moyens de communication et de traitement d'information (10) aptes à être configurés pour réaliser un moyen d'échange d'au moins une donnée entre le dispositif de sécurisation et le premier circuit intégré.

18. Système selon la revendication 16 ou 17, dans lequel le dispositif de sécurisation et/ou le premier circuit intégré comprennent au moins une mémoire destinée à sauvegarder au moins une donnée propre à l'image électrique de référence et/ou au moins une image électrique capturée lors du fonctionnement du premier circuit intégré.

19. Système selon l'une des revendications 16 à 18, dans lequel le réseau de connexions électriques est constitué par au moins une couche de matériau électriquement conducteur déposée sur le deuxième circuit intégré.
